(19)

Europäisches
Patentamt
European
Patent Office
Office européen
des brevets

(11) **EP 2 990 789 A1**

(12) **EUROPEAN PATENT APPLICATION**
published in accordance with Art. 153(4) EPC

(43) Date of publication:
**02.03.2016 Bulletin 2016/09**

(21) Application number: **14787514.0**

(22) Date of filing: **23.04.2014**

(51) Int Cl.:
*G01N 30/06* (2006.01)          *G01N 1/10* (2006.01)
*G01N 30/88* (2006.01)

(86) International application number:
**PCT/JP2014/061368**

(87) International publication number:
**WO 2014/175307 (30.10.2014 Gazette 2014/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **26.04.2013 JP 2013094248**

(71) Applicant: **Sumitomo Electric Industries, Ltd.
Osaka-shi, Osaka 541-0041 (JP)**

(72) Inventors:
• **SUGIHARA, Takayasu**
  **Osaka-shi, Osaka 554-0024 (JP)**
• **KAWAHARA, Yukiharu**
  **Osaka-shi, Osaka 554-0024 (JP)**
• **OHAMA, Osamu**
  **Osaka-shi, Osaka 554-0024 (JP)**

(74) Representative: **Boult Wade Tennant
Verulam Gardens
70 Gray's Inn Road
London WC1X 8BT (GB)**

(54) **METHOD FOR ANALYSIS FOR ORGANIC SUBSTANCE CONTAINED IN SOLUTION TO BE EXAMINED**

(57) An analysis method is provided, by which it is determined whether or not a solution to be examined contains an organic substance in an amount on the order of 20 mass ppb or less. The analysis method for organic substances in a solution to be examined includes the following steps: a sampling step in which 500 ml or less of a sample solution is taken from a solution to be examined; an adsorption step in which the sample solution is passed through activated carbon 8 so that the organic substance is adsorbed on the activated carbon; an extraction step in which the organic substance is extracted into a hydrophobic solvent; a specimen preparation step in which, a specimen solution is prepared by using the hydrophobic solvent into which the organic substance has been extracted; and an analysis step in which an analysis is performed to determine whether or not the organic substance in an amount of 20 mass ppb or less is contained in the solution to be examined. The activated carbon 8 has a specific surface area of 800 $m^2$/g or more, and the amount of the activated carbon 8 is 0.025 g/ml or more relative to the amount of the sample solution. In the adsorption step, the sample solution is passed at a rate of 7.5 ml/min or less on the discharge side of the activated carbon 8.

**FIG. 1**

EP 2 990 789 A1

## Description

Technical Field

The present invention relates to an analysis method for organic substances in a solution to be examined for determining the presence of a very small amount of an organic substance contained in the solution to be examined.

Background Art

In some cases, a very small amount of an organic substance contained in a solution to be examined may be determined by analysis. For example, Patent Literature 1 discloses an organic component analysis method for analyzing organic components (organic substances) contained in a high-concentration salt solution (solution to be examined), such as a plating solution or a battery electrolyte (analysis method for organic substances in a solution to be examined).

In Patent Literature 1, organic components are extracted from a high-concentration salt solution by solid phase extraction using activated carbon and an analysis is performed. More specifically, the method includes a step of passing a sample solution sampled from a high-concentration salt solution containing organic components through activated carbon so that the organic components in the sample solution are adsorbed on the activated carbon; a step of passing a solvent through the activated carbon after the adsorption step so that the adsorbed organic components are eluted; a step of concentrating and drying the solvent into which the organic components have been eluted; and a step of performing an analysis with a chromatograph, using the organic components as a specimen after the concentration and drying step.

Citation List

Patent Literature

PTL 1: Japanese Patent No. 3821000

Summary of Invention

Technical Problem

In recent years, there have been cases in which an analysis is required to determine whether or not a solution to be examined contains an organic substance in an amount by mass on the order of ppb (on the order of parts per billion). For example, recent studies by the applicant have shown that, in an electrolyte used for a redox flow battery, organic substances, even in a very small amount of 20 mass ppb or less, have a large effect on the performance of the redox flow battery. However, in the method for measuring organic substances in a solution to be examined according to Patent Literature 1, it is difficult to analyze such a very small amount of organic substances. The analysis method of Patent Literature 1 is primarily intended to analyze organic substances in an amount by mass on the order of ppm (on the order of parts per million) contained in a plating solution, and is not assumed to analyze organic substances in an amount by mass on the order of ppb.

The present invention has been achieved under these circumstances, and it is an object of the present invention to provide an analysis method for organic substances in a solution to be examined in which it is possible to perform an analysis to determine whether or not an organic substance in an amount on the order of 20 mass ppb or less is contained in the solution to be examined.

Solution to Problem

According to an embodiment of the present invention, an analysis method for organic substances in a solution to be examined includes a sampling step, an adsorption step, an extraction step, a specimen preparation step, and an analysis step.

[Sampling step]...A sample solution in an amount of 500 ml or less is taken from a solution to be examined having an unknown content of an organic substance.

[Adsorption step]...The sample solution is passed through activated carbon so that the organic substance is adsorbed on the activated carbon. Here, the activated carbon used in the adsorption step has a specific surface area of 800 $m^2$/g or more, and the amount of the activated carbon is 0.025 g/ml or more relative to the amount of the sample solution. Furthermore, in the adsorption step, the sample solution is passed at a rate of 7.5 ml/min or less on the discharge side of the activated carbon.

[Extraction step]...A hydrophobic solvent is passed through the activated carbon on which the organic substance has been adsorbed so that the organic substance is extracted into the hydrophobic solvent.

[Specimen preparation step]...Using the hydrophobic solvent into which the organic substance has been extracted, a specimen solution to be subjected to analysis for the organic substance is prepared.

[Analysis step]...By measuring components contained in the specimen solution with a chromatograph, an analysis is performed to determine whether or not the organic substance in an amount of 20 mass ppb or less is contained in the solution to be examined. Advantageous Effects of Invention

In the analysis method for organic substances in a solution to be examined according to the present invention, it is possible to perform an analysis to determine the presence or absence of an organic substance in an amount of 20 mass ppb or less contained in the solution to be examined.

Brief Description of Drawings

[Fig. 1] Figure 1 is a schematic view showing an example of an adsorber for organic substances used in an analysis method for organic substances in a solution to be examined.

[Fig. 2] Figure 2 is a schematic diagram showing a temperature profile of a PTV inlet according to a temperature program in an experimental example.

[Fig. 3] Figure 3 is a schematic diagram showing a temperature profile of a column installed in a chromatograph according to a temperature program in an experimental example.

Description of Embodiments

[Description of embodiments of the present invention]

First, contents of embodiments of the present invention are enumerated and described.

<1> According to an embodiment, an analysis method for organic substances in a solution to be examined includes a sampling step, an adsorption step, an extraction step, a specimen preparation step, and an analysis step.

- In the sampling step, 500 ml or less of a sample solution is taken from a solution to be examined having an unknown content of an organic substance.
- In the adsorption step, the sample solution is passed through activated carbon so that the organic substance is adsorbed on the activated carbon. Here, the activated carbon used in the adsorption step has a specific surface area of 800 $m^2$/g or more, and the amount of the activated carbon is 0.025 g/ml or more relative to the amount of the sample solution. Furthermore, in the adsorption step, the sample solution is passed at a rate of 7.5 ml/min or less on the discharge side of the activated carbon.
- In the specimen preparation step, using the hydrophobic solvent into which the organic substance has been extracted, a specimen solution to be subjected to analysis for the organic substance is prepared.
- In the analysis step, by measuring components contained in the specimen solution with a chromatograph, an analysis is performed to determine whether or not the organic substance in an amount of 20 mass ppb or less is contained in the solution to be examined.

By using the method described above, it is possible to perform an analysis to determine the presence or absence of an organic substance contained in a solution to be examined even if the amount of the organic substance is 20 mass ppb or less. The reasons for this are that, in the adsorption step, by using a predetermined amount or more of activated carbon having a predetermined specific surface area, it is possible to secure a sufficient contact area between the activated carbon and the sample solution; and that by passing the sample solution at a predetermined rate or less on the discharge side of the activated carbon, it is possible to secure a sufficient time during which the sample solution is in contact with the activated carbon (i.e., time during which the organic substance becomes adsorbed on the activated carbon). By securing the contact area and the contact time, even if the amount of an organic substance contained in the sample solution is very small, the organic substance can be adsorbed on the activated carbon in high yields. Furthermore, the analysis method for organic substances in a solution to be examined according to this embodiment can be of course used for analysis of a solution to be examined which has a possibility to contain an organic substance in an amount of more than 20 mass ppb.

<2> In the analysis method for organic substances in a solution to be examined according to this embodiment, in the analysis step, standard data is obtained, the standard data being obtained by measuring, with a chromatograph, components contained in a standard solution having a known content of the organic substance, and by comparing the analysis data obtained by measuring the specimen solution with the standard data, the content of the organic substance in the solution to be examined is quantified.

By using a standard solution having a known content of the organic substance for analysis, it is possible to obtain the standard data which shows a tendency for the kind of measurement result that will be obtained for a given degree of content of the organic substance. Accordingly, by comparing the standard data with the analysis data of the specimen solution, the content of the organic substance in the solution to be examined can be quantified with considerable accuracy.

<3> In the analysis method for organic substances in a solution to be examined according to this embodiment, in the analysis step, the specimen solution may be introduced into the chromatograph using a programmed temperature vaporization (PTV) technique.

The PTV technique is a method for introducing a specimen solution using a PTV inlet capable of increasing temperature, in which by heating the specimen solution in accordance with a predetermined temperature program, an organic substance contained in the specimen solution is vaporized and introduced into a chromatograph. When the PTV inlet is used, using the difference in vaporization temperature among components (including the organic substance) contained in the solution to be examined, the resolution of the components can be improved. As a result, the organic substance contained in the sample solution can be more accurately determined by analysis.

<4> In the analysis method for organic substances in a solution to be examined according to this embodiment, the solution to be examined may be an electrolyte for a redox flow battery (hereinafter referred to as the "RF electrolyte").

In recent years, as measures against global warming, power generation using natural energy (so-called renewable energy), such as solar power generation or wind power generation, has been actively conducted worldwide. Since the output of such power generation depends largely on natural conditions, such as weather, it has been taken into consideration to install large-capacity storage batteries in electrical power systems so that smoothing of variations in output, storage of surplus electricity, leveling of loads, and the like can be achieved. One of the large-capacity storage batteries is a redox flow battery (hereinafter referred to as the "RF battery"). The RF battery is a secondary battery in which a positive electrode, a negative electrode, and a separating membrane interposed therebetween are placed in a cell, and charging and discharging are performed by supplying a positive electrode electrolyte and a negative electrode electrolyte to the positive electrode and the negative electrode, respectively. In RF electrolytes used for such a RF battery, usually, metal elements whose valence is changed by oxidation-reduction are used as active materials. Examples of the RF battery include an iron ($Fe^{2+}/Fe^{3+}$)-chromium ($Cr^{3+}/Cr^{2+}$) RF battery in which Fe ions are used as the positive electrode active material and Cr ions are used as the negative electrode active material, and a vanadium ($V^{2+}/V^{3+}$-$V^{4+}/V^{5+}$) RF battery in which V ions are used as active materials for both electrodes. In the RF battery, charging and discharging take place by means of electrochemical reactions (electrode reactions) on electrodes. Therefore, if the electrodes do not function in accordance with design specifications, battery characteristics will be degraded, for example, a decrease in battery output and a decrease in battery capacity will occur. For example, when impurities adhere to the surface of an electrode and reaction active sites on the electrode are covered with the impurities, the surface area of the electrode is substantially decreased, resulting in a decrease in battery output and a decrease in battery capacity. It has been found that, among such impurities, in particular, organic substances seriously affect and decrease electrode reactions. Therefore, by using the analysis method for organic substances in a specimen to be examined according to this embodiment in order to quantify organic substances in an RF electrolyte so that the presence or absence of an organic substance in an amount of 20 mass ppb or less is fully understood in advance, it is possible to fabricate an RF battery that provides stable performance. The analysis method according to this embodiment can be of course used for a sampling inspection for an RF electrolyte after an RF battery has been in operation.

Furthermore, the analysis method for organic substances in a solution to be examined according to this embodiment is of course not limited to be used for analysis for organic substances in an RF electrolyte. For example, the analysis method according to the embodiment can be used for analysis for organic substances in a high-concentration salt solution containing 50 g or more of an inorganic salt dissolved per 1,000 ml of a solvent, such as analysis for organic substances in a plating solution.

<5> In the analysis method for organic substances in a solution to be examined according to this embodiment, in the case where the solution to be examined is an RF electrolyte, the organic substance may be a phthalate ester.

Recent studies by the applicant have shown that inclusion of, in particular, phthalate esters, among organic substances, in an RF electrolyte seriously affects and decreases battery reactions. Even when the organic substance concentration of a phthalate ester in an RF electrolyte is a very small amount on the order of mass ppb, battery reactions are likely to be hindered. Therefore, analysis of phthalate esters in an RF electrolyte is important in terms of stabilizing the performance of the redox flow battery.

<6> In the analysis method for organic substances in a solution to be examined according to this embodiment, in the adsorption step, the activated carbon may be divided into a plurality of units, and the sample solution may be continuously passed through the individual units.

According to the embodiment described above, it is possible to easily adjust the rate at which the solution passes through the activated carbon to 7.5 ml/min or less on the discharge side. Specific examples of dividing the activated carbon into a plurality of units include a configuration in which a plurality of tubes, into each of which activated carbon is charged, are prepared, and the tubes are joined to each other in an axial direction.

Alternatively, a configuration may be used in which activated carbon is charged into a tube provided with at least one narrow section inside, i.e., a configuration in which an upper activated carbon portion and a lower activated carbon portion are separated by the narrow section. Another configuration may be used in which activated carbon is charged into each of a plurality of tubes to be installed in an automatic extractor. In this case, the sample solution discharged from the nth tube may be introduced into the (n + 1)th tube (where n is a natural number).

<7> In the analysis method for organic substances in a solution to be examined according to this embodiment, the adsorption step, the extraction step, and the specimen preparation step may be performed fully automatically.

By fully automatically performing a series of steps of organic substance adsorption, organic substance extraction, and specimen solution preparation, each of the rate at which the sample solution passes in the adsorption step and the rate at which the hydrophobic solvent passes in the extraction step can be set substantially as configured, and each of the rates can be maintained substantially constant. Therefore, it is possible to improve stability and reliability of the analysis results for organic substances. Furthermore, the automation can suppress mixture (contamination) of organic substances into the sample solution, which also contributes to improvement in stability and reliability of the analysis results for organic substances.

[Detailed description of embodiments of the present invention]

Embodiments of an analysis method for organic substances in a solution to be examined will be described below. It is intended that the present invention is not limited to the embodiments, but is determined by appended claims, and includes all variations of the equivalent meanings and ranges to the claims.

<Embodiment 1>

In Embodiment 1, an example will be described in which organic substances contained in a vanadium RF electrolyte (solution to be examined) are analyzed (quantified). The RF electrolyte is an inorganic salt solution containing vanadium ions as an active material. For example, the vanadium ion concentration may be 1 to 3 M, and the sulfate ion concentration may be 1 to 4 M. In this case, the average valence of the RF electrolyte is about 3.3 to 3.7. In the RF electrolyte having such an average valence, either as an electrolyte on the positive electrode side or as an electrolyte on the negative electrode side, the concentrations of vanadium ions of different valences are well-balanced. Accordingly, in the case where an RF battery is configured using an RF electrolyte having such an average valence, the capacity of the RF battery can be markedly increased. The solution to be examined may be of course an iron-chromium RF electrolyte.

There is a possibility that organic substances will be mixed into the vanadium RF electrolyte (hereinafter simply referred to as the "RF electrolyte") in the fabrication process thereof. Furthermore, there is also a possibility that, with the operation of an RF battery using the RF electrolyte, organic substances will be mixed into the RF electrolyte from the components of the RF battery or the atmosphere in contact with the RF electrolyte. Examples of the organic substances include tetradecene ($C_{14}H_{28}$), octanethiol ($C_8H_{18}S$), n-decane ($C_{10}H_{22}$), and esters including dioctyl phthalate ($C_{24}H_{38}O_4$) which is a kind of phthalate ester. In the case where the content of these organic substances in an RF electrolyte is on the order of mass ppb, specifically, 20 mass ppb or less, in existing analysis methods, in order to quantify the organic substances in the RF electrolyte, it is necessary to sample a large amount (1,000 ml or more) of the RF electrolyte for quantitative determination. When such a large amount of a sample solution is used, it takes time to determine the quantity, and the amount of the RF electrolyte to be used for fabrication of an RF battery is largely decreased. Accordingly, in Embodiment 1, the analysis method for organic substances in a solution to be examined described below is performed.

The analysis method for organic substances in a solution to be examined used in Embodiment 1 includes a sampling step, an adsorption step, an extraction step, a specimen preparation step, and an analysis step. The individual steps will be described in order below.

«Sampling step»

In the sampling step, 500 ml or less of a sample solution is taken from an RF electrolyte prepared. Depending on the specifications of the adsorption step subsequent to the sampling step, the amount of the sample solution to be taken may be set at 300 ml or less, 200 ml or less, or 100 ml or less.

«Adsorption step»

In the adsorption step, the sample solution is passed through activated carbon so that an organic substance contained in the sample solution is adsorbed on the activated carbon. The activated carbon used in the adsorption step has a specific surface area of 800 $m^2$/g or more, and the amount of the activated carbon used is 0.025 g or more per 1 ml of the sample solution. Thereby, it is possible to secure a sufficient surface area of the activated carbon on which the organic substance contained in the sample solution is to be adsorbed. Furthermore, in the adsorption step, the liquid passing rate is adjusted to 7.5 ml/min or less on the discharge side of the activated carbon. Thereby, it is possible to secure a sufficient contact time between the sample solution and the activated carbon.

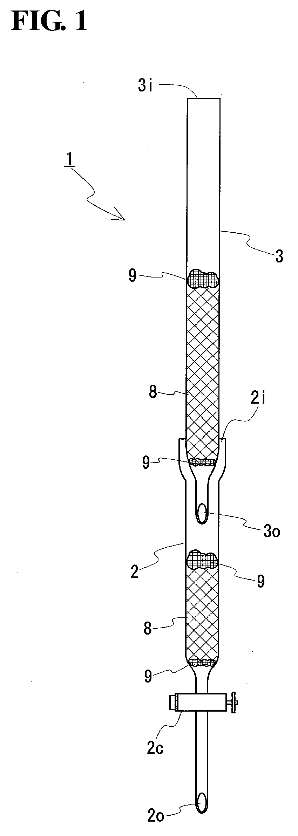

In order to set the liquid passing rate on the discharge side of the activated carbon to be 7.5 ml/min or less, the activated carbon may be divided into a plurality of units. For example, by using an adsorber 1 shown in Fig. 1, the liquid passing rate can be adjusted to 7.5 ml/min or less. The adsorber 1 shown in Fig. 1 includes a lower tube 2 provided with a cock 2c on the discharge side thereof, and an upper tube 3 which is fitted into an introduction port 2i of the lower tube 2. The introduction port 2i of the lower tube 2 is wide-mouthed, and the discharge port 3o side portion of the upper tube 3 is easily fitted into the introduction port 2i. The upper tube 3 is not provided with a cock on the discharge side thereof, and an introduction port 3i is not wide-mouthed. Glass wool 9, activated carbon 8, and glass wool 9 are charged in that order into each of the tubes 2 and 3. When a sample solution is introduced from the introduction port 3i of the upper tube 3, the sample solution is passed through the activated carbon 8 of the tube 3 and the activated carbon 8 of the tube 2 and is discharged from the discharge port 2o of the lower tube 2. In the adsorber 1 having such a structure in which tubes are interconnected, the rate at which the sample solution passes is reduced in the upper tube 3, and the rate at which the sample solution passes is also reduced in the lower tube 2 provided with the cock 2c. Therefore, it is possible to easily adjust the liquid passing rate to 7.5 ml/min or less on the discharge side of the activated carbon 8. Furthermore, the glass wool 9 prevents the fall-off of the activated carbon 8 from each of the tubes 2 and 3, and also has a function of reducing the rate at which the sample solution passes.

Preferably, the adsorber 1 is subjected to pre-treatment (conditioning), before use, for the purpose of washing out adsorbates adsorbed on the activated carbon and improving the hydrophilic property of the activated carbon. For example, a hydrophobic solvent such as benzene, and an alcohol such as ethanol, and distilled water are passed through the activated carbon in that order. The hydrophobic solvent can wash out adsorbates, the alcohol can wash out the hydrophobic solvent, and distilled water can improve the hydrophilic property of the activated carbon.

After the pre-treatment for the adsorber 1 has been completed, a sample solution is introduced from the introduction port 3i of the upper tube 3 of the adsorber 1. At this time, a sufficient surface area of the activated carbon 8 on which an organic substance is to be adsorbed is secured, and moreover, a sufficient contact time between the activated carbon 8 and the sample solution is secured. Therefore, the organic substance contained in the sample solution is adsorbed on the activated carbon 8 in high yields.

«Extraction step»

In the extraction step, by passing a hydrophobic solvent through the activated carbon 8 in the adsorber 1, the organic substance adsorbed on the activated carbon is dissolved and extracted into the hydrophobic solvent. Prior to the extraction, preferably, water in the activated carbon 8 is removed. For example, by passing an alcohol such as ethanol through the activated carbon 8, the water in the activated carbon can be removed. The alcohol also has a role of improving affinity between the activated carbon 8 and the hydrophobic solvent to be passed through the activated carbon 8 in the process of extracting the organic substance.

Examples of the hydrophobic solvent used in the extraction step include organic solvents, such as benzene. By passing the hydrophobic solvent, the organic substance adsorbed on the activated carbon 8 can be efficiently collected.

«Specimen preparation step»

In the specimen preparation step, using the hydrophobic solvent into which the organic substance has been extracted, a specimen solution to be subjected to organic substance analysis is prepared. Specifically, first, by drying the hydrophobic solvent into which the organic substance has been extracted, the organic substance is concentrated. A reduced pressure evaporator can be used to concentrate the organic substance. The concentration using the reduced pressure evaporator may be performed, for example, under the conditions at 0.08 to 0.1 MPa and at 65°C to 80°C for 15 to 30 minutes.

After the organic substance has been concentrated, a specimen solution in which the organic substance is dissolved in a constant volume of a solvent is prepared. As the solvent used for the preparation of the specimen solution, a low-boiling-point solvent (i.e., a solvent having a lower boiling point than the organic substance to be quantified), such as acetone, may be used. The volume of the specimen solution is preferably about 1.5 to 5.0 ml.

«Analysis step»

In the analysis step, the organic substance contained in the specimen solution is determined by analysis with a chromatograph (gas chromatograph).

In the analysis step, preferably, the specimen solution is introduced into the chromatograph using a programmed temperature vaporization technique (PTV technique). By using the PTV technique, the resolution of the components of the specimen solution can be improved. The temperature program may be appropriately changed depending on the component composition of the specimen solution. For example, in the case where the organic substance is dioctyl phthalate, and the solvent for dissolving the organic substance is acetone, the PTV inlet temperature program may include a first heating period in which heating is performed at 60°C to 70°C for 2.5 minutes or less, a second heating period in which heating is performed at 120°C to 150°C for 3.0 minutes or less, and a third heating period in which heating is performed at 300°C to 350°C for 5.0 minutes or less. The rate of temperature increase during transition from one heating period to another heating period is preferably set at 200°C/min to 300°C/min.

In the first heating period, mainly, the solvent of the specimen solution is vaporized. That is, acetone (boiling point = 56.5°C) is vaporized. In the first heating period, the solvent (acetone) is vaporized, but substantially no organic substance (dioctyl phthalate) is vaporized. The vaporized acetone is not introduced into the chromatograph, but is discharged. In the subsequent second heating period, mainly, the organic substance to be examined is vaporized. That is, dioctyl phthalate is vaporized. The vaporized dioctyl phthalate is introduced into a column installed in the chromatograph. In the third heating period, high-boiling-point components of the specimen solution are vaporized, and at the same time, the organic substance (dioctyl phthalate) is completely vaporized. The vaporized component is also introduced into the column of the chromatograph.

After the specimen is introduced into the column installed in the chromatograph, the temperature of the column is increased, and components from the column are introduced into a detector of the chromatograph. For example, in a column temperature program, the heating start temperature is set at 60°C to 100°C, the column is heated to 350°C at a rate of temperature increase of about 20°C/min, and the column is held at 350°C for 20 minutes or less. The column temperature setting influences the peak separation, i.e., resolution of the components.

Analysis for the organic substance, i.e., quantification of the organic substance, can be automatically performed by a computer which controls the chromatograph. For example, standard data is obtained, the standard data being obtained by analyzing, with a chromatograph, a standard solution having a known content of the organic substance, and quantification of the organic substance is performed on the basis of the standard data. An analysis may be performed to simply determine whether or not 20 mass ppb or less of the organic substance is contained in the solution to be examined.

«Advantages»

In the analysis method for organic substances in a solution to be examined described above, even when the amount of an organic substance contained in the solution to be examined is 20 mass ppb or less, and the amount of a sample solution sampled from the solution to be examined is 500 ml or less, the organic substance contained in the solution to be examined can be quantified. The reason for this is mainly that, in the adsorption step of the analysis method, the organic substance contained in the sample solution can be adsorbed on the activated carbon in high yields.

<Experimental Example 1>

In Experimental Example 1, an organic substance contained in a vanadium RF electrolyte was actually quantified as described below.

«Preparation of solution to be examined»

A vanadium RF electrolyte having a vanadium ion concentration of 1.8 M and a sulfate ion concentration of 3 M was prepared. Dioctyl phthalate (organic substance) had been intentionally added into the RF electrolyte, and the concentration thereof was 10.0 mass ppb. This concentration is only an example, and the same analysis is possible as long as the concentration is 0.5 mass ppb (detection limit) or more. Note that, according to the recent studies by the applicant, the permissible content of dioctyl phthalate in an RF electrolyte is 10.0 mass ppb or less.

«Preparation of adsorber»

An adsorber 1 having a structure in which tubes are interconnected shown in Fig. 1 was prepared. A lower tube 2 and an upper tube 3 constituting the adsorber 1 were made of glass. Into the lower tube 2, glass wool 9 was charged, 3.5 g of bead-shaped activated carbon 8 was charged thereon, and glass wool 9 was further charged. Furthermore, into the upper tube 3, glass wool 9 was charged, 4.5 g of bead-shaped activated carbon 8 was charged thereon, and glass wool 9 was further charged. The specific surface area of the activated carbon 8 charged into the tubes 2 and 3 was 800 m$^2$/g. That is, the total surface area of the activated carbon in the adsorber was 800 m$^2$/g $\times$ 8 g = 6,400 m$^2$.

«Pre-treatment of adsorber»

The adsorber 1 was subjected to pre-treatment for the purpose of washing the activated carbon 8 and imparting a hydrophilic property to the activated carbon 8. Specifically, through the two-stage column, 5 ml of benzene was passed 10 times, then 5 ml of ethanol was passed three times, and finally, 20 ml of distilled water was passed three times.

«Adsorption of dioctyl phthalate on activated carbon»

A sample solution (200 ml) sampled from the RF electrolyte was passed through the activated carbon 8 in the adsorber 1 subjected to pre-treatment. Specifically, the sample solution was introduced from the introduction port 3i of the upper tube 3 of the adsorber 1. At this time, by adjusting the cock 2c of the lower tube 2, the drip rate of the sample solution discharged from the discharge port 2o of the lower tube 2 was adjusted to 7.5 ml/min or less. The sample solution was disposed of.

«Extraction of organic substance»

As pre-treatment for extracting dioctyl phthalate adsorbed on the activated carbon 8, first, by passing 400 ml of distilled water through the adsorber 1, vanadium ions, sulfate ions, and the like attached to inner peripheral surfaces of the tubes 2 and 3 and the activated carbon 8 were removed. Next, by passing 5 ml of ethanol through the adsorber 1 four times, water in the adsorber 1 was removed. The distill water and ethanol were disposed of.

After completion of the pre-treatment, 5 ml of benzene was passed through the adsorber 1 four times to recover 20 ml of a recovered liquid into a flat-bottom flask, and this process was repeated five times. The total amount of the recovered liquid was about 100 ml.

«Concentration of organic substance»

The recovered liquid was dried with a reduced pressure evaporator. The inside of the evaporator for receiving the recovered liquid had been washed in advance three times with acetone and once with benzene. When the recovered liquid was dried, by rotating the flat-bottom flask while reducing the pressure inside the flat-bottom flask, benzene in the recovered liquid was concentrated to dryness. The concentration was performed under the conditions at 0.1 MPa and at 65°C × 20 min.

«Preparation of specimen solution»

By placing 2 ml of acetone into the flat-bottom flask after benzene had been concentrated, dioctyl phthalate was dissolved in acetone. The resulting acetone solution was recovered and transferred into a syringe equipped with a disk filter. A filtrate was transferred from the syringe through the disk filter into a vial and used as a specimen solution.

«Analysis for organic substance»

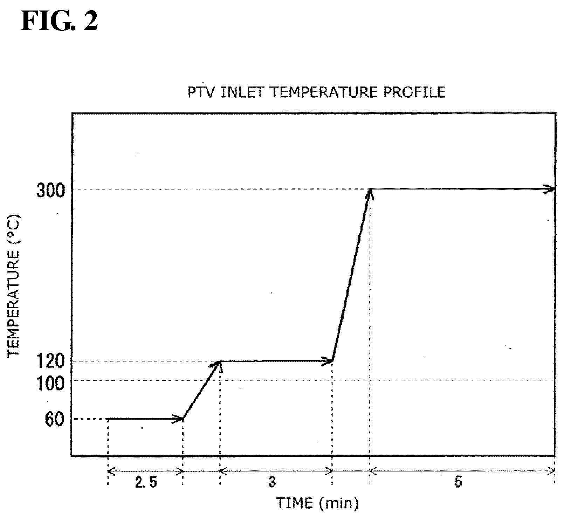

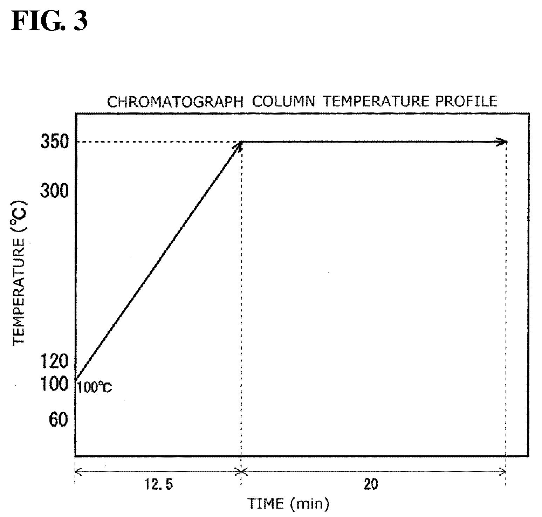

The vial was placed in an autosampler for gas chromatography. The specimen solution was introduced into the chromatograph using the PTV technique, and the organic substance was determined by analysis. In the PTV technique, conditions for temperature programs for the PTV inlet and the chromatograph column were as described below. Just for reference, the temperature profiles of temperature programs for the PTV inlet and the column are shown in the schematic diagrams of Figs. 2 and 3, respectively.

(PTV inlet)

$$\text{First heating time} = 60°C \times 2.5 \text{ min}$$

$$\text{Second heating time} = 120°C \times 3.0 \text{ min}$$

$$\text{Third heating time} = 300°C \times 5.0 \text{ min}$$

$$\text{Rate of temperature increase} = 300°C/\text{min}$$

(Column)

$$\text{Start temperature} = 100°C$$

$$\text{Holding temperature} = 350°C$$

$$\text{Rate of temperature increase} = 20°C/\text{min}$$

In the analysis for the organic substance, a standard solution having a known content of dioctyl phthalate is also analyzed. When standard data obtained from the standard solution is available, by comparing the standard data with the analysis data obtained from the specimen solution, the concentration of the dioctyl phthalate contained in the vanadium RF electrolyte can be determined. In this experimental example, by obtaining two types of standard data from two standard solutions having different contents of dioctyl phthalate, accuracy of quantification was improved. One standard solution contained 2 $\mu$g of dioctyl phthalate per 1 ml of acetone, and the other standard solution contained 5 $\mu$g of dioctyl phthalate per 1 ml of acetone.

«Quantification result»

From the analysis data obtained by the gas chromatograph, it was possible to detect dioctyl phthalate. Furthermore, the comparison between the analysis data and the standard data obtained from the standard solutions showed that the concentration of dioctyl phthalate in the vanadium RF electrolyte was 9.8 mass ppb. Since the concentration of dioctyl phthalate intentionally added during preparation of the vanadium RF electrolyte was 10.0 mass ppb, it became obvious that it was possible to quantify dioctyl phthalate in the vanadium RF electrolyte with considerable accuracy.

<Experimental Example 2>

As a comparative example of Experimental Example 1, in Experimental Example 2, the adsorber used in the adsorption step was configured to have a single-tube structure, and dioctyl phthalate in an RF electrolyte was quantified. The configuration other than the adsorber and the quantification procedure were the same as those in Experimental Example 1. The content of dioctyl phthalate in the RF electrolyte was, of course, 10.0 mass ppb as in Experimental Example 1.

The adsorber in Experimental Example 2 was prepared by charging glass wool, activated carbon, glass wool in that order into a tube made of glass. The specific surface area of the activated carbon was 800 m²/g, and the total amount of the activated carbon was 8 g. When 200 ml of the sample solution was passed through the adsorber having the single-tube structure, the drip rate of the sample solution (i.e., liquid passing rate on the discharge side of the activated carbon) was 10 ml/min.

After that, according to the same procedure as that of Experimental Example 1, a specimen solution was prepared, and an analysis was performed for the organic substance contained in the specimen solution. It was not possible to obtain analysis data that could confirm the presence of dioctyl phthalate.

The results of Experimental Example 2 showed that, in the case where the drip rate of the sample solution was high, it was difficult to quantify or even detect dioctyl phthalate in an amount by mass on the order of ppb contained in the RF electrolyte.

<Additional statement>

The most characteristic features of the embodiment described above are that a sufficient contact area between the activated carbon and the sample solution is secured and that a sufficient time during which the sample solution is in contact with the activated carbon is secured. From this viewpoint, there is a possibility that, by using the following analysis method for organic substances in a solution to be examined, an organic substance in an amount by mass on the order of ppb will be determined by analysis.

That is, an analysis method for organic substances in a solution to be examined includes a sampling step, an adsorption step, an extraction step, a specimen preparation step, and an analysis step.

- In the sampling step, 500 ml or less of a sample solution is taken from a solution to be examined which is suspected of containing an organic substance.
- In the adsorption step, the sample solution and activated carbon are stirred in the same container so that the organic substance is adsorbed on the activated carbon. Here, the activated carbon used in the adsorption step has a specific surface area of 800 m²/g or more, and the amount of the activated carbon is 0.025 g/ml or more relative to the amount of the sample solution. Furthermore, the stirring time in the adsorption step is 20 to 60 minutes.
- In the extraction step, a hydrophobic solvent is passed through the activated carbon on which the organic substance has been adsorbed so that the organic substance is extracted into the hydrophobic solvent.
- In the specimen preparation step, using the hydrophobic solvent into which the organic substance has been extracted, a specimen solution to be subjected to organic substance analysis is prepared.
- In the analysis step, by measuring components contained in the specimen solution with a chromatograph, an analysis is performed to determine whether or not the organic substance in an amount of 20 mass ppb or less is contained in the solution to be examined.

The sampling step, the specimen preparation step, and the analysis step may be performed as in Embodiment 1.

In the adsorption step, for example, the sample solution is placed in a container, such as a beaker, and the activated carbon is gradually added into the sample solution while stirring the sample solution with a stirrer or the like. Here, the stirring time described above is a stirring time in which the point at which all the amount of activated carbon is charged is defined as the starting time.

In the extraction step, for example, a mixed solution of the sample solution and activated carbon subjected to the adsorption step is charged into a column, a hydrophilic solution (ethanol or the like) is passed through the column to wash away the sample solution, and then a hydrophobic solvent is charged thereinto. The sample solution discharged from the column when the mixed solution is charged into the column may be disposed of. Furthermore, the hydrophilic solution, which is passed through for the purpose of removing the residue of the sample solution, may be disposed of. The reason for this is that it is believed that the organic substance contained in the sample solution has been sufficiently adsorbed on the activated carbon in the adsorption step.

Industrial Applicability

The analysis method for organic substances in a solution to be examined according to the present invention is suitable for use in the analysis for an organic substance contained in the solution to be examined. In particular, the analysis method for organic substances in a solution to be examined according to the present invention can be suitably used for quality check of an electrolyte for a redox flow battery by analyzing organic substances contained in the electrolyte for a redox flow battery.

Reference Signs List

1     adsorber
2     lower tube
2i    introduction port
2o    discharge port
2c    cock
3     upper tube
3i    introduction port

3o    discharge port
8     activated carbon
9     glass wool

**Claims**

1. An analysis method for organic substances in a solution to be examined comprising:

   a sampling step in which 500 ml or less of a sample solution is taken from a solution to be examined having an unknown content of an organic substance;
   an adsorption step in which the sample solution is passed through activated carbon so that the organic substance is adsorbed on the activated carbon;
   an extraction step in which a hydrophobic solvent is passed through the activated carbon on which the organic substance has been adsorbed so that the organic substance is extracted into the hydrophobic solvent;
   a specimen preparation step in which, using the hydrophobic solvent into which the organic substance has been extracted, a specimen solution to be subjected to analysis for the organic substance is prepared; and
   an analysis step in which, by measuring components contained in the specimen solution with a chromatograph, an analysis is performed to determine whether or not the organic substance in an amount of 20 mass ppb or less is contained in the solution to be examined,
   wherein the activated carbon used in the adsorption step has a specific surface area of 800 m$^2$/g or more, and the amount of the activated carbon is 0.025 g/ml or more relative to the amount of the sample solution; and
   wherein, in the adsorption step, the sample solution is passed at a rate of 7.5 ml/min or less on the discharge side of the activated carbon.

2. The analysis method for organic substances in a solution to be examined according to Claim 1, wherein, in the analysis step, standard data is obtained, the standard data being obtained by measuring, with a chromatograph, components contained in a standard solution having a known content of the organic substance, and by comparing the analysis data obtained by measuring the specimen solution with the standard data, the content of the organic substance in the solution to be examined is quantified.

3. The analysis method for organic substances in a solution to be examined according to Claim 1 or 2, wherein, in the analysis step, the specimen solution is introduced into the chromatograph using a programmed temperature vaporization technique.

4. The analysis method for organic substances in a solution to be examined according to any one of Claims 1 to 3, wherein the solution to be examined is an electrolyte for a redox flow battery.

5. The analysis method for organic substances in a solution to be examined according to Claim 4, wherein the organic substance is a phthalate ester.

6. The analysis method for organic substances in a solution to be examined according to any one of Claims 1 to 5, wherein, in the adsorption step, the activated carbon is divided into a plurality of units, and the sample solution is continuously passed through the individual units.

7. The analysis method for organic substances in a solution to be examined according to any one of Claims 1 to 6, wherein the adsorption step, the extraction step, and the specimen preparation step are performed fully automatically.

# FIG. 1

# FIG. 2

PTV INLET TEMPERATURE PROFILE

## FIG. 3

CHROMATOGRAPH COLUMN TEMPERATURE PROFILE

## INTERNATIONAL SEARCH REPORT

| International application No. |
|---|
| PCT/JP2014/061368 |

**A. CLASSIFICATION OF SUBJECT MATTER**
*G01N30/06*(2006.01)i, *G01N1/10*(2006.01)i, *G01N30/88*(2006.01)i

According to International Patent Classification (IPC) or to both national classification and IPC

**B. FIELDS SEARCHED**

Minimum documentation searched (classification system followed by classification symbols)
G01N30/06, G01N1/10, G01N30/88

Documentation searched other than minimum documentation to the extent that such documents are included in the fields searched
Jitsuyo Shinan Koho          1922-1996    Jitsuyo Shinan Toroku Koho    1996-2014
Kokai Jitsuyo Shinan Koho    1971-2014    Toroku Jitsuyo Shinan Koho    1994-2014

Electronic data base consulted during the international search (name of data base and, where practicable, search terms used)
JSTPlus(JDREAMIII)

**C. DOCUMENTS CONSIDERED TO BE RELEVANT**

| Category* | Citation of document, with indication, where appropriate, of the relevant passages | Relevant to claim No. |
|---|---|---|
| Y | JP 2003-222618 A  (Sumitomo Electric Industries, Ltd.), 08 August 2003 (08.08.2003), paragraphs [0011] to [0048]; fig. 1, 2 (Family: none) | 1-7 |
| Y | WO 2008/156199 A1  (GL Science Inc.), 24 December 2008 (24.12.2008), page 9, lines 19 to 23 & US 2011/0023711 A1    & EP 2161573 A1 & CN 101784893 A | 1-7 |
| Y | JP 2001-261319 A  (Osaka Gas Co., Ltd.), 26 September 2001 (26.09.2001), paragraph [0019] (Family: none) | 1-7 |

| ☒ | Further documents are listed in the continuation of Box C. | ☐ | See patent family annex. |

| * | Special categories of cited documents: |
|---|---|
| "A" | document defining the general state of the art which is not considered   to   be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 24 July, 2014 (24.07.14) | 05 August, 2014 (05.08.14) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2014/061368 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | Marija Vukcevic,et.al., Application of carbonized hemp fibers as a new solid-phase extraction sorbent for analysis of pesticides in water samples, Chemical Engineering Journal, 2012.11.15, Vol.211-212, pages 224 to 232 | 1-7 |
| Y | JP 2006-284345 A  (Shimadzu Corp.), 19 October 2006 (19.10.2006), paragraph [0005] (Family: none) | 3 |
| Y | JP 2002-155031 A  (Asahi Glass Co., Ltd.), 28 May 2002 (28.05.2002), paragraph [0023] & US 2003/0203501 A1    & EP 1336601 A1 & WO 2002/040437 A1    & AU 1432602 A & CA 2429074 A          & CN 1474801 A & KR 10-2003-0055302 A  & RU 2289567 C & ZA 200303344 A | 3 |
| Y | JP 2001-83052 A  (Miura Co., Ltd.), 30 March 2001 (30.03.2001), paragraphs [0055] to [0056], [0063]; fig. 1 (Family: none) | 6 |
| Y | JP 2003-130860 A  (Asahi Kasei Corp.), 08 May 2003 (08.05.2003), claims 1 to 10 (Family: none) | 7 |

Form PCT/ISA/210 (continuation of second sheet) (July 2009)

**EP 2 990 789 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3821000 B